Europäisches Patentamt

European Patent Office

Office européen des brevets

(11) Veröffentlichungsnummer: **0 155 689**
A2

(12) # EUROPÄISCHE PATENTANMELDUNG

(21) Anmeldenummer: 85103286.2

(22) Anmeldetag: 21.03.85

(51) Int. Cl.⁴: **A 01 C 7/00**
**A 01 B 73/00**

(30) Priorität: 23.03.84 US 592696

(43) Veröffentlichungstag der Anmeldung:
25.09.85 Patentblatt 85/39

(84) Benannte Vertragsstaaten:
DE FR GB

(71) Anmelder: DEERE & COMPANY
1 John Deere Road
Moline Illinois 61265(US)

(72) Erfinder: Landphair, Donald Keith
3965 Wakonda Drive
Bettendorf Iowa 52722(US)

(74) Vertreter: Sartorius, Peter et al,
DEERE & COMPANY European Office, Patent
Department Postfach 503 Steubenstrasse 36-42
D-6800 Mannheim 1(DE)

(54) Bodenbearbeitungsgerät.

(57) Eine Sämaschine ist mit einem Hauptrahmen ausgerüstet, an dem seitlich horizontal verschwenkbare Träger (22) zur Aufnahme von Säorganen angeschlossen sind, die über am Hauptrahmen und an den Trägern gelagerte Wellen (25, 27) antreibbar sind. Die Wellenenden sind endseitig mit Kupplungselementen (50) ausgerüstet. Ein jedes Kupplungselement (50) besteht aus einem Führungsflächen aufweisenden Kupplungskopf (56), die beim Einschwenkvorgang des Trägers (22) in eine Arbeitsstellung dazu beitragen, daß die miteinander zu verbindenden Wellen sich koaxial zueinander ausrichten. Zwei Führungsflächen des Kupplungskopfes (56) sind so zueinander ausgerichtet, daß sie in der Arbeitsstellung der Sämaschine gegeneinander anliegen und dadurch eine Antriebsverbindung zwischen jeweils zwei Wellen (25, 27) herstellen.

Fig. 4

EP 0 155 689 A2

## Bodenbearbeitungsgerät

Die Erfindung bezieht sich auf ein Bodenbearbeitungsgerät oder eine Sämaschine mit einem Hauptrahmen und mindestens einem zwischen einer Arbeits- und einer Transportstellung verschwenkbaren Rahmenträger, an dem über am Hauptrahmen und dem Rahmenträger gelagerte Wellen antreibbare Arbeitswerkzeuge angeordnet sind, wobei im Bereich der Wellenenden miteinander in Eingriff bringbare Führungsflächen aufweisende Kupplungselemente vorgesehen sind, über die die sich gegenüberliegenden Wellenenden derart ausrichtbar sind, daß mindestens zwei Mitnehmerelemente in Antriebsverbindung bringbar sind.

Es ist ein Bodenbearbeitungsgerät der eingangs aufgeführten Art bekannt (US-A-4 368 003), das einen Hauptrahmen sowie daran angeschlossene horizontal verschwenkbare Seitenrahmen zur Aufnahme von Säorganen und Düngeeinrichtungen aufweist. Zur Versorgung der einzelnen Arbeitsorgane mit Saatgut bzw. Düngemittel sind Förderrohre vorgesehen, in denen Schneckenwendeln drehbar gelagert sind. Das eine Ende der Schneckenwendel ist mit einem nach vorne spitz zusammenlaufenden Dorn ausgerüstet, der in ein rohrförmiges Gegenstück einführbar ist. Zum Kupplungsvorgang der beiden Schneckengehäuse sind ein trichterförmiger Aufnahmeteil einerseits sowie andererseits ein pyramidenstumpfförmiges Gegenstück vorgesehen, die miteinander in Eingriff bringbar sind und eine Zentrierung der Wellenenden ermöglichen, so daß diese koaxial zueinander ausgerichtet werden können. Zur Antriebsverbindung der beiden Wellen der Schnecken dienen Mitnehmerelemente, die beim Zusammenführen der Wellenenden gegen die Schneckenwendeln zur Anlage kommen und somit eine Antriebsverbindung zwischen den beiden Wellen herstellen. Beim größeren seitlichen Versatz der gegenüberliegenden Wellen reichen diese Kupplungs- und Führungselemente nicht aus, eine einwandfreie koaxiale Ausrichtung der beiden gegenüberliegenden Wellen herbeizuführen. Auch besteht die Möglichkeit, daß bei übermäßiger Beanspruchung der Mitnehmerelemente diese eine Beschädigung an den Schneckenwendeln herbeiführen können. Aufgrund der punktförmigen Anlage der Mitnehmerelemente gegen die Schnekkenwendelenden wird eine Verbindung geschaffen, die beim Arbeitsvorgang infolge von Rattern große Geräusche verursacht.

Demgegenüber liegt der Erfindung die Aufgabe zugrunde, die Rahmenteile des Bodenbearbeitungsgerätes oder der Sämaschine sowie die für die Arbeitswerkzeuge vorgesehenen Wellen derart auszubilden und anzuordnen, daß die Rahmenteile sowie die Wellen beim Einschwenkvorgang der Rahmenteile in die Endlagestellung bzw. Arbeitsstellung koaxial zueinander ausgerichtet werden und gleichzeitig eine leicht zu lösende Antriebsverbindung zwischen den einzelnen Wellen geschaffen wird. Diese Aufgabe ist dadurch gelöst worden, daß die Kupplungselemente gleichzeitig Mitnehmerelemente sind und je einen Kupplungskopf mit Führungsflächen aufweisen, die auf einer Ebene liegen, die sich von der Mittelachse der Wellen radial erstrecken, wobei die sich radial erstreckenden Führungsflächen gegeneinander anliegen, wenn die Rahmenteile oder Rahmenträger eine Arbeitsstellung eingenommen haben. Durch die vorteilhafte Ausbildung und Anordnung der Kupplungselemente zur Verbindung zweier nebeneinander liegender Wellen, die von einer Transportstellung in eine Arbeitsstellung verschwenkbar sind, erhält man eine einwandfreie geräuscharm arbeitende Kupplungsvorrichtung, die es gestattet, auch bei größerem seitlichen Versatz der einzelnen Träger untereinander diese genau zueinander auszurichten. Eine ratterfreie Verbindung zwischen den beiden nebeneinander liegenden Wellen wird dadurch geschaffen, daß die zugehörigen Antriebsflächen der Kupplungselemente flach gegeneinander aufliegen, so daß eine große Kraftübertragung zwischen den zu verbindenden Wellen möglich ist. Die großflächige Anlage der beiden Antriebsflächen gestattet auch größere Herstellungstoleranzen, so daß auch dann eine einwandfreie Antriebsverbindung zwischen den Wellen hergestellt werden kann, wenn diese nicht genau koaxial zueinander ausgerichtet sind. Dies wird auch dadurch begünstigt, daß die beiden Antriebsflächen sich radial von der geometrischen Mittelachse der Wellen nach außen erstrecken. Hierzu ist es vorteilhaft, daß der Kupplungskopf neben den sich radial erstreckenden und gegenüberliegenden Führungsflächen, die als Antriebsflächen ausgebildet sind, mindestens zwei weitere Führungsflächen aufweist, wobei mindestens zwei Führungsflächen gegeneinander zur Anlage bringbar sind, wenn die Wellen untereinander fluchten. Da neben den Antriebsflächen zur Antriebsverbindung zwischen den beiden Wellen weitere Führungsflächen vorgesehen sind, erhält man die Möglichkeit, die beiden Wellen koaxial sowie radial zueinander auszurichten, wenn diese von der Transportstellung in die Arbeitsstellung verschwenkt werden. Hierzu ist es vorteilhaft, daß der Kupplungskopf mindestens zwei weitere äußere Führungsflächen aufweist, die die von der Mittelachse der Wellen sich radial erstreckenden, außenliegenden Kanten der Antriebsflächen miteinander verbinden, und daß der Kupplungskopf zwei weitere innere Führungsflächen aufweist, die die von der Mittelachse der Wellen sich radial erstreckenden, innenliegenden Kanten der Antriebsflächen miteinander verbinden.

In weiterer Ausgestaltung der Erfindung ist es vorteilhaft, daß der Kupplungskopf einen ringförmigen Kragen aufweist, der aus den die außenliegenden Kanten der Antriebsflächen miteinander verbindenden Führungsflächen, den Antriebsflächen sowie den die innenliegenden Kanten der Antriebsflächen miteinander verbindenden Führungsflächen gebildet ist, und daß der Kupplungskopf einen als Spitze ausgebildeten Führungsdorn aufweist, der sich von dem ringförmigen Kragen axial nach außen erstreckt. Durch den ringförmigen Kragen mit den zugehörigen Antriebsflächen und Führungsflächen wird eine exakte Ausrichtung der Wellen zueinander ermöglicht, wenn die Führungsflächen gegeneinander zur Anlage gebracht werden. Die Führungsflächen des Kupplungskopfes kommen kurz vor der Endlagestellung bzw. der Erreichung der Arbeitsstellung des verschwenkbaren Rahmenträgers zur Anlage und gewährleisten beim abschließenden Schwenkvorgang ein automatisches Ausrichten der nebeneinander liegenden Wellen. Um auch eine Axialverstellung der beiden Wellen über die Führungsflächen vornehmen zu können, ist es vorteilhaft, daß der Führungsdorn aus zahlreichen mit Bezug auf den Kragen sich axial erstreckenden Führungsflächen gebildet ist, die die Spitze des Führungsdornes mit dem Kragen verbinden, und daß ein jedes Kupplungselement einen Steg aufweist, der den Kupplungskopf mit der zugehörigen Welle verbindet, wobei der Steg sich von der Welle radial erstreckt. Vorteilhaft ist es ferner, daß der an dem Steg angeordnete Kupplungskopf mit Bezug auf die zugehörige Welle radial nach außen versetzt ist und sich in Axialrichtung hinter das Wellenende der Welle erstreckt und daß die beiden Wellen aufnehmenden Träger miteinander in Eingriff bringbare Kupplungselemente aufweisen, die beim Schwenkvorgang zumindest eines Trägers in die Arbeitsstellung die Träger sowie die Wellen koaxial zueinander ausrichten. Die seitlich herausstehenden Kupplungsköpfe ermöglichen über einen großen Schwenkbereich des verstellbaren Trägers einen Ausrichtungsvorgang der einzelnen Wellen mit einfachen baulichen Mitteln. Ferner kann auf diese Weise eine sehr starke, robuste Kupplungsverbindung für die einzelnen Wellen geschaffen werden. Vorteilhaft ist es außerdem, daß ein an dem einen Träger vorgesehenes Kupplungselement aus einer Fangausnehmung mit zwei V-förmig zueinander ausgerichteten Gleitflächen besteht, die an ihrer engsten Stelle durch eine Nut begrenzt wird, in die ein am schwenkbaren Träger vorgesehener Kupplungsbolzen in der Endlagestellung bzw. Arbeitsstellung des verschwenkbaren Trägers einführ- bzw. einrastbar ist, der den Ausrichtvorgang der beiden Träger sowie der Wellen unterstützt. Außerdem ist es vorteilhaft, daß durch einfache Anlage der beiden am Kupplungskopf vorgesehenen Antriebsflächen eine Antriebsverbindung zwischen der treibenden und der getriebenen Welle herstellbar ist.

In weiterer Ausgestaltung der Erfindung ist es vorteilhaft, daß ein jedes Kupplungselement zur Antriebsverbindung der Wellen einen mit der Welle lösbar verbindbaren Flanschteil mit einer Bohrung aufweist, die als Sechskantbohrung ausgebildet sein kann, an dem der Steg radial angeschlossen ist, an dessen freiem Ende der Kupplungskopf angeordnet ist, dessen durch den Kragen und die Spitze verlaufende Achse parallel zur Längsachse des Flanschteiles bzw. der zugehörigen Wellen verläuft, und daß die äußere Begrenzung des Kragens mit Abstand zum Außenumfang des Flanschteiles angeordnet ist. Durch die seitliche Versetzung der Kupplungselemente kann für einen großen Schwenkbereich der Träger bereits eine Anlage zwischen den einzelnen Wellenenden bzw. den Kupplungsköpfen geschaffen werden. Außerdem bietet diese Anordnung der Kupplungsköpfe die Möglichkeit, einen Kupplungskopf so lange zu drehen, bis er gegen den zugehörigen Kupplungskopf der verschwenkbaren Welle zur Anlage kommt. Die Verwendung des Kupplungskopfes mit der zugehörigen Fangausnehmung unterstützt den Ausrichtungsvorgang der beiden nebeneinander liegenden Träger, wenn der eine Träger von der Transportstellung in die Arbeitsstellung verschwenkt wird. Die V-förmig zueinander verlaufenden Fangausnehmungen unterstützen den Zentrierungsvorgang und gewährleisten, daß in der Endlagestellung des Kupplungsbolzens die beiden nebeneinander liegenden Träger koaxial zueinander ausgerichtet sind. Gleichzeitig wird gewährleistet, daß die zugehörigen Kupplungselemente zur Anlage kommen, wobei lediglich die antreibbare Welle gedreht zu werden braucht, bis sie gegen das entsprechende Gegenstück anliegt.

Im folgenden wird die Erfindung anhand von lediglich einen Ausführungsweg darstellenden Zeichnungen näher erläutert. Es zeigt:

Fig. 1    eine Draufsicht einer Sämaschine mit einem
an einem Hauptrahmen horizontal verschwenkbar gelagerten Seitenrahmen, an dem die
Säorgane angeordnet sind,

Fig. 2    eine perspektivische Darstellung des einen
Endes des mittleren Rahmenteiles zur Aufnahme der verschwenkbar gelagerten Rahmenteile
sowie Kupplungselemente zur Verbindung der
an den Rahmenteilen angeordneten Antriebswelle,

Fig. 3    ebenfalls eine perspektivische Darstellung
eines Endes des verschwenkbaren Rahmenteiles
mit einem Anlageteil und einem Aufnahmeteil
zur Aufnahme des in einer Ebene angeordneten
mittleren Rahmenteils sowie Kupplungselemente, die an dem verschwenkbaren Rahmenteil
vorgesehen sind,

Fig. 4    eine perspektivische Darstellung des mittleren Rahmenteils und der Enden der seitlich
angeschlossenen Rahmenteile in einer Stellung, in der die Rahmenteile in eine Arbeitsstellung verschwenkt werden, wobei die sich
gegenüberliegenden Enden der Wellen sich in
einer Stellung befinden, kurz bevor sie in
ihre endgültige Lage gebracht werden, in
der sie untereinander fluchten,

Fig. 5    ein einzelnes Kupplungselement für die Wellen der vorliegenden Erfindung,

Fig. 6    eine Draufsicht des Kupplungselementes,

Fig. 7    das Kupplungselement gemäß Fig. 6, wobei es gegenüber der in Fig. 6 dargestellten Stellung um 90° gedreht ist,

Fig. 8     eine Endansicht gemäß Fig. 5, wobei ein zweites Kupplungselement teilweise im Schnitt dargestellt ist,

Fig. 9     eine Schnittdarstellung der verschwenkbaren Rahmenteile und der zugehörigen Wellen und Kupplungselemente in einer Stellung, in der die seitlichen Rahmenteile sich dem mittleren Rahmenteil bzw. dem Hauptrahmenteil nähern.

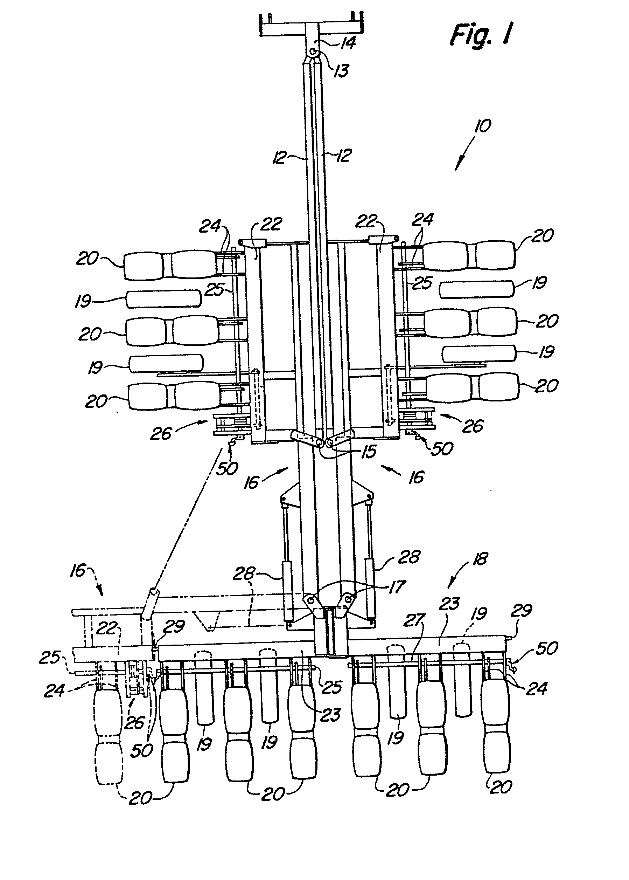

In der Zeichnung ist mit 10 ein Bodenbearbeitungsgerät, beispielsweise eine Sä- bzw. Pflanzmaschine, bezeichnet, die zwei sich in Fahrtrichtung bzw. Arbeitsrichtung erstreckende Träger 12 aufweist, die der Anhängevorrichtung entsprechen und über einen vertikal verlaufenden Gelenkbolzen 13 an eine Anhängeschiene 14 eines in der Zeichnung nicht dargestellten Schleppers angeschlossen sind. Die beiden hinteren Enden der Träger 12 bzw. der Anhängevorrichtung sind über vertikal verlaufende Bolzen 15 und über Laschen an horizontal verschwenkbaren Rahmenträgern 16 angeschlossen. Die beiden Rahmenträger 16 sind spiegelbildlich zueinander ausgebildet und jeweils über einen Gelenkbolzen 17 an den mittleren bzw. Hauptrahmen 18 schwenkbar angeschlossen. Die beiden verschwenkbaren Rahmenträger 16 sowie der mittlere Hauptrahmen 18 stützen sich auf Laufrädern 19 ab. An den einzelnen Rahmenträgern bzw. an dem Hauptrahmen sind Bodenbearbeitungswerkzeuge bzw. die Sä- und Pflanzvorrichtungen 20 angeschlossen (siehe Fig. 1).

Die einzelnen Sä- bzw. Pflanzvorrichtungen 20 sind an Träger 22, die Bestandteil der Rahmenträger 16 sind, und an einen mittleren Träger 23, der Bestandteil des Hauptrahmens 18 ist, mittels parallel verlaufender Lenker 24 angeschlossen. Eine jede Sä- und Pflanzvorrichtung 20 weist eine in der Zeichnung nicht dargestellte Dosierungsvorrichtung auf, mittels der Düngemittel in den Boden abgegeben werden kann, wobei die Dosierungsvorrichtungen über Wellen antreibbar sind. Ein jeder Träger 22 weist eine Antriebswelle 25 auf, die über eine Antriebsvorrichtung bzw. ein Getriebe 26 mit den Laufrädern 19 antriebsverbunden ist. Der mittlere Träger 23 ist ebenfalls mit einer Antriebswelle 27 ausgerüstet, die mit den einzelnen Antriebswellen 25 der beiden horizontal verschwenkbaren Träger 22 über Kupplungselemente 50 antriebsverbindbar ist. Die Kupplungselemente 50 werden dann miteinander in Eingriff gebracht, wenn die Sä- und Pflanzmaschine bzw. die einzelnen Rahmenträger 16 von ihrer Transportstellung gemäß Fig. 1 in eine Arbeitsstellung (siehe gestrichelte Darstellung in Fig. 1) gebracht werden. Die Sä- und Pflanzmaschine 10 bzw. die einzelnen Rahmenträger 16 werden aus ihrer Transportstellung in ihre Arbeitsstellung gebracht, indem hierzu Hydraulikzylinder 28 mit Druckmittel beaufschlagt werden. Durch Einfahren der Kolbenstangen der Hydraulikzylinder 28 werden die beiden verschwenkbaren Rahmenträger 16 auf einem Kreisbogen nach hinten bewegt, wobei sie um die Gelenkbolzen 17 schwenken, bis die Träger 22 auf der gleichen Querebene liegen wie der Träger 23 des Hauptrahmens 18.

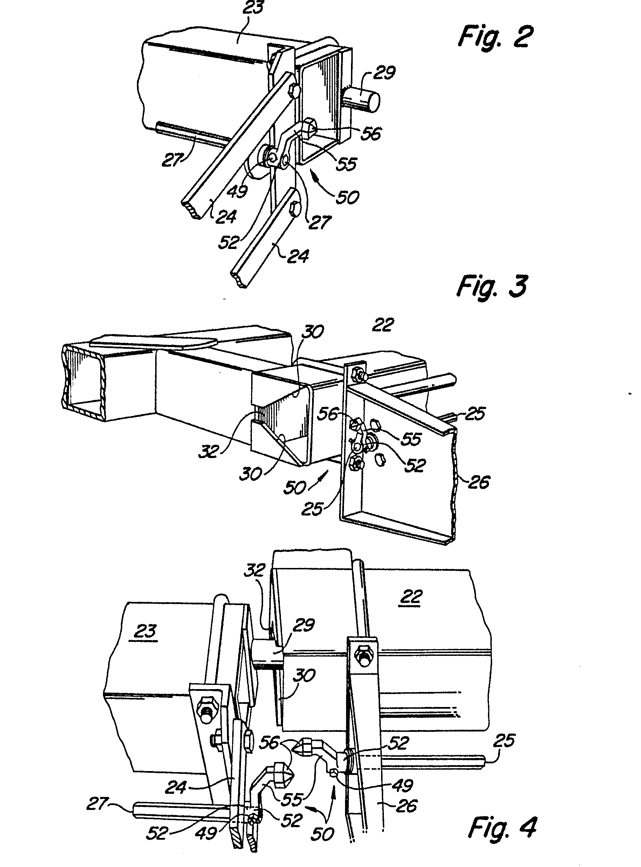

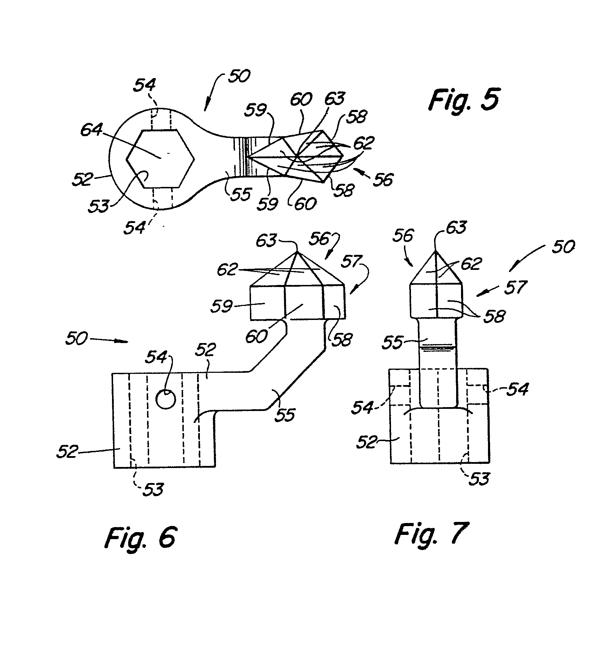

Wie insbesondere aus den Figuren 4 und 5 hervorgeht, werden Kupplungselemente 50 an den sich gegenüberliegenden Enden der Antriebswellen 25 und 27 angebracht. Um eine ordnungsgemäße Anbringung der Kupplungselemente zu ermöglichen, ist es notwendig, die beiden Wellen 25 und 27 untereinander fluchtend auszurichten. Wie insbesondere aus den Figuren 2 bis 4 hervorgeht, weist der mittlere Träger 23 einen Kupplungsbolzen zum Ausrichten des Trägers 22 gegenüber dem Träger 23 auf. Der Kupplungsbolzen 29 ist hierzu an dem mittleren Träger 23 angeordnet und erstreckt sich von diesem in Richtung einer Fangausnehmung 30, die am Ende des Trägers 22 angeordnet ist. Wenn der verschwenkbare Träger 22 sich dem mittleren Träger 23 nähert, so gelangt der Kupplungsbolzen 29 zwischen die beiden V-förmig zueinander verlaufenden Kontaktflächen der Fangausnehmung 30 und wird dabei in die Nut 32 eingeführt, die sich am Ende der beiden Kontaktflächen der Fangausnehmung 30 befindet. Auf diese Weise wird der Träger 22 gegenüber dem mittleren Träger 23 fluchtend ausgerichtet, so daß sie auf der gleichen Querebene liegen, wenn das Gerät seine Arbeitsstellung eingenommen hat. Durch das Ausrichten der Träger 22 und 23 werden auch die beiden Wellen 25 und 27 fluchtend zueinander ausgerichtet, so daß ihre Enden sich dicht gegenüberliegen und somit die Kupplungselemente zur Verbindung der beiden Wellenenden eingeschoben werden können.

Wie aus den Figuren 5 und 7 hervorgeht, besteht das Kupplungselement aus einem Flanschteil 52 mit einer sich axial erstreckenden Öffnung 53 und zwei sich gegenüberliegenden, die Öffnung 53 schneidenden Bohrungen 54 zur Aufnahme eines Sicherungsbolzens 49. An den Flanschteil 52 schließt sich ein von dem Flanschteil sich radial erstreckender Steg 55 an, der den Flanschteil 52 mit einem Kupplungskopf 56 verbindet. Der Kupplungskopf 56 besteht aus einem Kragen 57, der aus sechs einzelnen Flächen gebildet ist, wobei zwei als äußere Führungsflächen 58, zwei als innere Führungsflächen 59 und zwei als Antriebsflächen 60 bezeichnet werden. Die sechs Führungsflächen 62 erstrecken sich von dem Kragen 57 in Achsrichtung und laufen an einem Mittelpunkt 64 pyramidenförmig zusammen.

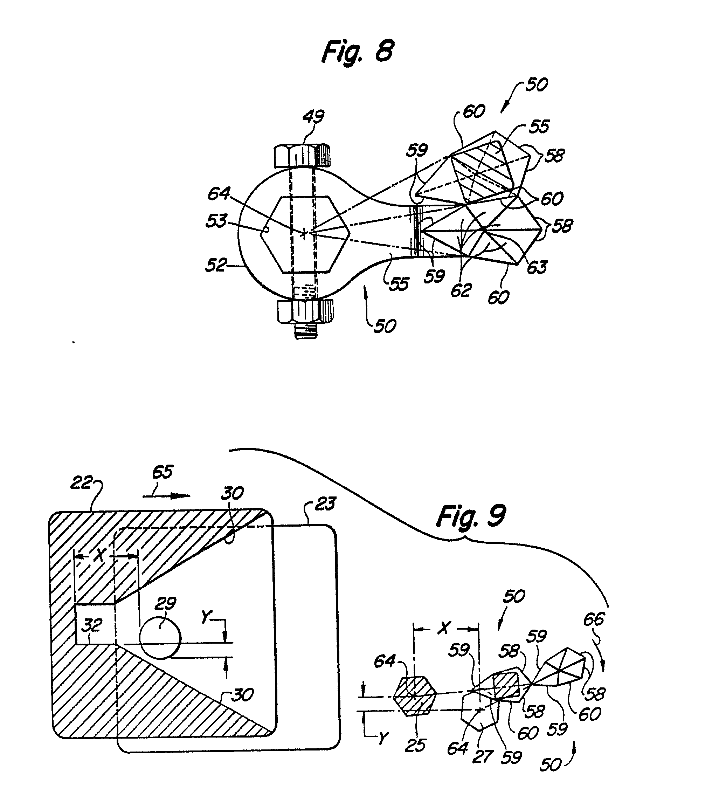

Wie insbesondere aus den Figuren 5 und 8 hervorgeht, liegt eine jede Führungsfläche 60 auf einer Ebene, die sich von dem Mittelpunkt 64 der Öffnung 53 radial erstreckt. Die Kupplungselemente 50 sind an den Enden der entsprechenden Wellen 25 und 27 angeordnet, und die beiden Führungsflächen 60 liegen auf einer Ebene, die sich von den Achsen der Wellen 25 und 27 radial erstreckt. Sind die beiden Wellen 25 und 27 axial zueinander ausgerichtet und stehen miteinander in Antriebsverbindung (siehe Fig. 8), so liegen die beiden Flächen 60 der Kupplungselemente 50 gegeneinander an.

Im Arbeitseinsatz sind die Kupplungselemente an die Enden der Wellen 25 und 27 angeschlossen, wobei die Kupplungsköpfe 56 sich gemäß Fig. 4 gegenüberliegen. Die Kupplungselemente 50 werden durch Einführen der Wellenenden in die Öffnungen 53 an die entsprechenden Wellen 25 und 27 angeschlossen, wobei die Sicherung der Kupplungselemente durch Einführen von Bolzen 49 in die Öffnungen 54 erfolgt. Es ist natürlich auch eine andere Montage der Kupplungselemente 50 möglich, wenn dadurch sichergestellt ist, daß die Kupplungselemente gegen Axialverstellung und gegen Drehung mit Bezug auf die Wellen 25 und 27 gesichert sind.

Um für die Kupplungselemente eine einwandfreie Funktion zu gewährleisten, ist es zuerst notwendig, die beiden Wellen 25 und 27 axial zueinander auszurichten, so daß die beiden sich gegenüberliegenden Enden einen relativ kleinen Abstand untereinander aufweisen. Das Ausrichten der Wellen 25 und 27 gemäß Fig. 1 bis 4 mittels der Führungsflächen kann sowohl in axialer als auch in radialer Richtung erfolgen, wobei das entsprechende Ende der Welle 25 sich auf einem Kreisbogen um den Gelenkbolzen 17 bewegt und sich dabei der Welle 27 nähert. Die einzelnen Bewegungsphasen, in denen sich die beiden Wellen 25 und 27 einander nähern, sind in Fig. 9 veranschaulicht. Aus Fig. 9 ist insbesondere die radiale Verstellung des Trägers 22 mit dem zugehörigen Kupplungsteil 50 veranschaulicht.

Wie insbesondere aus Fig. 4 hervorgeht, liegen die beiden Kupplungselemente 50 dicht beieinander, wenn die beiden Wellen 25 und 27 zueinander koaxial ausgerichtet werden. Werden der Träger 22 und der mittlere Träger 23 arretiert, indem der Kupplungsbolzen 29 in der Nut 32 aufgenommen ist, dann werden die Wellen 25 und 27 in Axialrichtung arretiert, wobei die beiden Enden der Wellen 25 und 27 dicht gegenüberliegen. Der Abstand zwischen den Wellenenden der Wellen 25 und 27 ist so groß, daß bei Anbringung der Kupplungselemente 50 der Kragen 57 in dem Zwischenraum zwischen den Enden der Wellen 25 und 27 aufgenommen werden kann.

Wenn die Wellen 25 und 27 und die angebrachten Kupplungselemente sich einander nähern, so können durch die entsprechende Stellung der Kupplungsköpfe 56 zwei von den Führungsflächen 58, 59, 60 und 62 miteinander in Berührung kommen. Haben die beiden Wellen 25 und 27 sich in die entsprechende Stellung bewegt, in der sie untereinander fluchten, so bewirken die Führungsflächen 58, 59 und 62 sowie die Spitze 63, daß die Führungsflächen 60 der sich einander nähernden Kupplungselemente 50 in einen Flächenkontakt treten. Dabei ist es gleichgültig, wie die einzelnen Kupplungsköpfe 56 der Kupplungselemente 50 zueinander stehen, wenn die beiden Wellen 25 und 27 in eine untereinander fluchtende Stellung gebracht werden.

Wird beispielsweise das eine Kupplungselement 50 von dem anderen Kupplungselement weggedreht, so werden die Kupplungsköpfe 56 beim Ausrichtungsvorgang sich nicht berühren. Beispielsweise kann die Spitze 63 des einen Kupplungselementes 50 die Führungsfläche 62 des anderen Kupplungselementes 50 berühren. Werden die beiden Wellen 25 und 27 weiter in eine Stellung verstellt, in der sie untereinander ausgerichtet sind, so bewirkt der Kontakt einer Führungsfläche 62 eine Drehung des Kupplungselementes 50 in eine Richtung, in der die beiden Führungsflächen 60 gegeneinander anliegen. Es wird darauf hingewiesen, daß es besonders vorteilhaft ist, daß der Kontakt der Kupplungselemente beim Ausrichtungsvorgang der Wellen 25 und 27 durch Anlage der Führungsfläche 62 mit der innenliegenden Fläche 58 bzw. der außenliegenden Führungsfläche 59 erfolgen kann, um dadurch die beiden Führungsflächen 60 zueinander auszurichten. Ebenso ist es möglich, daß beim Ausrichtungsvorgang ein Kontakt der sich in Axialrichtung erstreckenden Führungsflächen 62 mit den Führungsflächen 60 möglich ist.

Wie aus Fig. 4 hervorgeht, kann es möglich sein, daß durch Drehen der Kupplungselemente 50 in eine Stellung, in der sie aneinander herangebracht werden, die Führungsflächen 58 und 59 sich berühren, ohne daß die Spitze 63 oder die Führungsfläche 62 mit den Führungsflächen 58 und 59 Kontakt bekommt.

Wie aus Fig. 9 hervorgeht, machen die Kupplungselemente 50 den anfänglichen Kontakt, wenn die Wellen 25 und 27 sich in Radialrichtung einander nähern. Im Ausführungsbeispiel verlaufen die Wellen 25 und 27 parallel zueinander, wenn sie axial zueinander ausgerichtet werden. Somit werden die Enden der Wellen 25 und 27 nicht in Axialrichtung aufeinander zubewegt, wenn die Ausrichtung erfolgt, und die axial verlaufenden Führungsflächen 62 und die sich axial erstreckende Spitze 63 sind somit nicht am Kupplungskopf 56 in dem Fall erforderlich. Wie aus Fig. 9 ferner hervorgeht, berührt die innenliegende Führungsfläche 59 des Kupplungselementes 50, das mit der Welle 27 verbunden ist, die außenliegende Führungsfläche 58 des Kupplungselementes 50, das mit der Welle 25 verbunden ist. Wenn der Träger 22 sich auf einer Bahn gemäß Pfeil 65 bewegt, dann bewegt sich die Welle 25 radial in Richtung der Welle 27, wobei diese Bewegung durch den horizontalen Abstand x angegeben ist, und die Welle bewegt sich bei dieser Phase radial in Richtung der Welle 25, die durch den vertikalen Abstand y angegeben ist. Gleichzeitig wird durch die Berührung der Führungsfläche 58 und 59 die Welle 27 gedreht, und zwar auf einem Kreisbogen, der durch den Pfeil 66 angedeutet ist. Die fortgesetzte Anlage der Führungsfläche 58 und 59 bewirkt die fortschreitende Anlage der sich gegenüberliegenden Führungsflächen 60 (siehe Fig. 8).

Bei allen Ausführungsformen wird durch die Kupplungselemente sichergestellt, daß auf die Wellen 25 und 27 eine Drehbewegung ausgeübt wird, indem sich die Führungsflächen berühren, die an den Kupplungselementen 50 vorgesehen sind.

Die Kupplungselemente werden entweder in Kontakt oder außer Kontakt gebracht, indem die Antriebswelle 25 und die Antriebswelle 27 koaxial zueinander ausgerichtet werden oder seitlich zueinander versetzt sind.

Patentansprüche

1. Bodenbearbeitungsgerät oder Sämaschine mit einem Hauptrahmen (18) und mindestens einem zwischen einer Arbeits- und einer Transportstellung verschwenkbaren Rahmenträger (16), an dem über am Hauptrahmen (18) und dem Rahmenträger (16) gelagerte Wellen (25, 27) antreibbare Arbeitswerkzeuge angeordnet sind, wobei im Bereich der Wellenenden miteinander in Eingriff bringbare Führungsflächen aufweisende Kupplungselemente (50) vorgesehen sind, über die die sich gegenüberliegenden Wellenenden derart ausrichtbar sind, daß mindestens zwei Mitnehmerelemente in Antriebsverbindung bringbar sind, dadurch gekennzeichnet, daß die Kupplungselemente (50) gleichzeitig Mitnehmerelemente sind und je einen Kupplungskopf (56) mit Führungsflächen (60) aufweisen, die auf einer Ebene liegen, die sich von der Mittelachse (Mittelpunkt 64) der Wellen (25, 27) radial erstrecken, wobei die sich radial erstreckenden Führungsflächen (60) gegeneinander anliegen, wenn die Rahmenteile oder Rahmenträger (16) eine Arbeitsstellung eingenommen haben.

2. Bodenbearbeitungsgerät nach Anspruch 1, dadurch gekennzeichnet, daß der Kupplungskopf (56) neben den sich radial erstreckenden und gegenüberliegenden Führungsflächen, die als Antriebsflächen (60) ausgebildet sind, mindestens zwei weitere Führungsflächen aufweist, wobei mindestens zwei Führungsflächen gegeneinander zur Anlage bringbar sind, wenn die Wellen untereinander fluchten.

3. Bodenbearbeitungsgerät nach Anspruch 2, dadurch gekennzeichnet, daß der Kupplungskopf (56) mindestens zwei weitere äußere Führungsflächen (58) aufweist, die die von der Mittelachse (Mittelpunkt 64) der Wellen (25, 27) sich radial erstreckenden, außenliegenden Kanten der Antriebsflächen (60) miteinander verbinden.

4. Bodenbearbeitungsgerät nach einem oder mehreren der
vorherigen Ansprüche, dadurch gekennzeichnet, daß der
Kupplungskopf (56) zwei weitere innere Führungsflächen
(59) aufweist, die die von der Mittelachse (Mittelpunkt 64) der Wellen (25, 27) sich radial erstreckenden, innenliegenden Kanten der Antriebsflächen (60)
miteinander verbinden.

5. Bodenbearbeitungsgerät nach einem oder mehreren der
vorherigen Ansprüche, dadurch gekennzeichnet, daß der
Kupplungskopf (56) einen ringförmigen Kragen (57)
aufweist, der aus den die außenliegenden Kanten der
Antriebsflächen (60) miteinander verbindenden Führungsflächen (58), den Antriebsflächen (60) sowie den
die innenliegenden Kanten der Antriebsflächen (60)
miteinander verbindenden Führungsflächen (59) gebildet ist.

6. Bodenbearbeitungsgerät nach einem oder mehreren der
vorherigen Ansprüche, dadurch gekennzeichnet, daß der
Kupplungskopf (56) einen als Spitze (63) ausgebildeten
Führungsdorn aufweist, der sich von dem ringförmigen
Kragen (57) axial nach außen erstreckt.

7. Bodenbearbeitungsgerät nach einem oder mehreren der
vorherigen Ansprüche, dadurch gekennzeichnet, daß der
Führungsdorn aus zahlreichen mit Bezug auf den Kragen
(57) sich axial erstreckenden Führungsflächen (62)
gebildet ist, die die Spitze (63) des Führungsdornes
mit dem Kragen verbinden.

8. Bodenbearbeitungsgerät nach einem oder mehreren der
vorherigen Ansprüche, dadurch gekennzeichnet, daß ein
jedes Kupplungselement (50) einen Steg (55) aufweist, der den Kupplungskopf (56) mit der zugehörigen Welle (25 oder 27) verbindet, wobei der Steg sich von der Welle radial erstreckt.

9. Bodenbearbeitungsgerät nach einem oder mehreren der vorherigen Ansprüche, dadurch gekennzeichnet, daß der an dem Steg (55) angeordnete Kupplungskopf (56) mit Bezug auf die zugehörige Welle (25, 27) radial nach außen versetzt ist und sich in Axialrichtung hinter das Wellenende der Welle (25, 27) erstreckt.

10. Bodenbearbeitungsgerät nach einem oder mehreren der vorherigen Ansprüche, dadurch gekennzeichnet, daß die beiden Wellen (25, 27) aufnehmenden Träger (22, 23) miteinander in Eingriff bringbare Kupplungselemente aufweisen, die beim Schwenkvorgang zumindest eines Trägers (22, 23) in die Arbeitsstellung die Träger sowie die Wellen koaxial zueinander ausrichten.

11. Bodenbearbeitungsgerät nach einem oder mehreren der vorherigen Ansprüche, dadurch gekennzeichnet, daß ein an dem einen Träger (22, 23) vorgesehenes Kupplungselement aus einer Fangausnehmung (30) mit zwei V-förmig zueinander ausgerichteten Gleitflächen besteht, die an ihrer engsten Stelle durch eine Nut (32) begrenzt wird, in die ein am schwenkbaren Träger (22) vorgesehener Kupplungsbolzen in der Endlagestellung bzw. Arbeitsstellung des verschwenkbaren Trägers einführ- bzw. einrastbar ist, der den Ausrichtvorgang der beiden Träger sowie der Wellen (25, 27) unterstützt.

12. Bodenbearbeitungsgerät nach einem oder mehreren der vorherigen Ansprüche, dadurch gekennzeichnet, daß durch einfache Anlage der beiden am Kupplungskopf (56) vorgesehenen Antriebsflächen (60) eine Antriebsverbindung zwischen der treibenden und der getriebenen Welle (25 und 27) herstellbar ist.

13. Bodenbearbeitungsgerät nach einem oder mehreren der vorherigen Ansprüche, dadurch gekennzeichnet, daß ein jedes Kupplungselement (50) zur Antriebsverbindung der Wellen (25, 27) einen mit der Welle (25 bzw. 27) lösbar verbindbaren Flanschteil (52) mit einer Bohrung aufweist, die als Sechskantbohrung ausgebildet sein kann, an dem der Steg radial angeschlossen ist, an dessen freiem Ende der Kupplungskopf (56) angeordnet ist, dessen durch den Kragen (57) und die Spitze (63) verlaufende Achse parallel zur Längsachse des Flanschteiles bzw. der zugehörigen Wellen (25, 27) verläuft.

14. Bodenbearbeitungsgerät nach einem oder mehreren der vorherigen Ansprüche, dadurch gekennzeichnet, daß die äußere Begrenzung des Kragens (57) mit Abstand zum Außenumfang des Flanschteiles (52) angeordnet ist.

Fig. 1

1/4

Fig. 2

Fig. 3

Fig. 4

3/4

Fig. 5

Fig. 6

Fig. 7

4/4

Fig. 8

Fig. 9